# EUROPEAN PATENT APPLICATION

(11) **EP 2 657 089 A1**
(43) Date of publication of application: **30.10.2013**
(21) Application number: 12165295.2
(22) Date of filing: 24.04.2012
(51) Int. Cl.: B60R 21/0132

(54) **A vehicle safety system**

(71) Applicant: Autoliv Development AB, 447 83 Vårgårda (SE)
(72) Inventor: Laoufi, Moroine, 92600 Asnieres-sur Seine (FR); Zin, Alessandro, 78300 Poissy (FR)
(74) Representative: Beattie, Alex Thomas Stewart

(57) **Abstract**

A method for activating safety systems of a motor vehicle, the method comprising the steps of: monitoring signals from at least one vehicle sensor; analysing the signals from the at least one sensor to determine that the vehicle appears to be involved in a particular one of a plurality of pre-defined "run off the road" events: confirming the determination by analysing signals from at least one different vehicle sensor, performing a different analysis on the signals from the at least one sensor, or analysing signals from the at least one sensor over a predetermined period of time; where a detection is confirmed, estimating the severity of the event; and based on a confirmed determination that the vehicle is involved in a particular event, and the estimated severity of the event, selecting one or more vehicle safety systems to be activated to protect an occupant of the vehicle.

## Description

The present invention relates to a vehicle safety system, and in particular a system for determining effectively when a vehicle has left a road, and for reliably activating vehicle safety systems as and when they are required.

Several systems have been proposed for determining when a vehicle has left a road surface, and for activating vehicle safety systems in response to this. For instance, EP2289753 discloses a method of detecting when a vehicle is airborne, principally through the use of accelerometers, and for activating vehicle safety systems, for instance if a determination that the vehicle is airborne persists for a predetermined length of time.

It is an object of the present invention to provide an improved system of this type.

Accordingly, one aspect of the present invention provides a method for activating safety systems of a motor vehicle, the method comprising the steps of: monitoring signals from at least one vehicle sensor; analysing the signals from the at least one sensor to determine that the vehicle appears to be involved in a particular one of a plurality of pre-defined "run off the road" events: confirming the determination by analysing signals from at least one different vehicle sensor, performing a different analysis on the signals from the at least one sensor, or analysing signals from the at least one sensor over a predetermined period of time; where a detection is confirmed, estimating the severity of the event; and based on a confirmed determination that the vehicle is involved in a particular event, and the estimated severity of the event, selecting one or more vehicle safety systems to be activated to protect an occupant of the vehicle.

Preferably, the analysing step includes determining that the vehicle appears to be involved in a particular one of: travelling over rough terrain; entering a ditch; and being airborne;

Conveniently, the step of comparing the signals received from the sensors with stored thresholds relating to each of the pre-defined events.

Advantageously, the detection of an event is confirmed if signals indicating that the event is occurring persist for a predetermined length of time.

Preferably, the method further includes a state selection step, carried out after the confirming step, wherein, when the signals received from the at least one vehicle sensor could indicate that two or more possible events are occurring, selecting one of the two or more possible events.

Conveniently, an event is selected using a hierarchy.

Advantageously, if the signals from the at least one sensor could indicate that the vehicle is airborne, or is travelling over rough terrain or is entering a ditch, the state of the vehicle being airborne is selected.

Preferably, if the signals from the at least one sensor could indicate that the vehicle is entering a ditch or travelling over rough terrain, the state of travelling over rough terrain is selected.

Conveniently, the state of entering a ditch is selected only if the signals from the vehicle sensors are not consistent with the vehicle being airborne or the vehicle travelling over rough terrain.

Advantageously, the vehicle is equipped with a reversible restraint system and an irreversible restraint system, and wherein the reversible restraint system is activated if the estimated severity is above a first threshold but below a second threshold, and the irreversible restraint system is activated if the estimated severity is above the second threshold.

Another aspect of the present invention provides a computer program comprising computer program code adapted to perform all of the steps of any one of the above when run on a computer.

A further aspect of the present invention provides a computer program according to the above, embodied on a computer-readable medium.

Another aspect of the present invention provides a vehicle having at least one vehicle sensor, one or more vehicle safety system and a processor, wherein the processor is operable to carry out all of the steps of any one of the above.

In order that the present invention may be more readily understood, embodiments thereof will now be described, by way of example, with reference to the accompanying drawings, in which:
Figure 1 shows a schematic view of a vehicle;
Figure 2 shows the vehicle travelling over rough terrain;
Figure 3 shows the vehicle entering a ditch;
Figure 4 shows the vehicle when airborne; and
Figure 5 is a logic diagram schematically representing a state selection step of a method embodying the present invention.

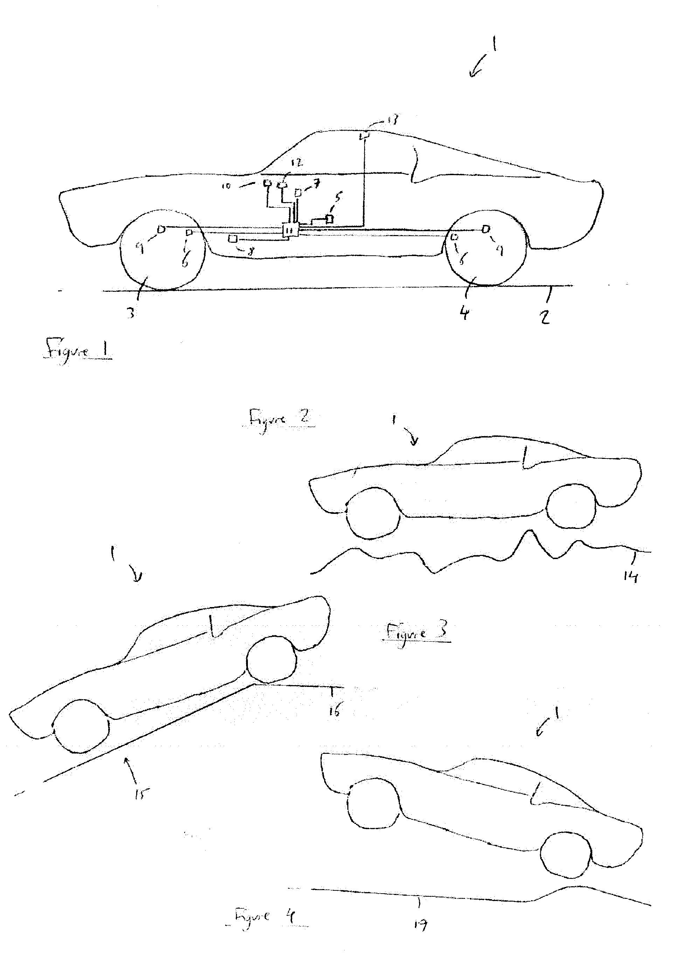

Referring firstly to figure 1, a vehicle 1 is shown in normal driving conditions on a flat road surface 2. Both the front wheels 3 and the rear wheels 4 are in contact with the road surface 2.

The vehicle is equipped with various sensors. In the depicted embodiment the sensors include:
- Inertia sensors 5. At least some of the inertia sensors 5 may be provided at or near the centre of gravity of the vehicle 1. However, inertia sensors 5 may be distributed throughout the vehicle 1 and placed in any suitable locations, and indeed in some embodiments at least some of the inertia sensors 5 may be located away from the vehicle's centre of gravity. The inertia sensors 5 may include, but are not limited to, yaw rate sensors, roll rate sensors, longitudinal acceleration sensors, lateral acceleration sensors, vertical acceleration sensors and pitch rate sensors.
- Wheel rotation sensors 6. The wheel rotation sensors 6 detect the rate of rotation (and/or rate of change of rate of rotation) of the front wheels 3, the rear wheels 4, or both. The rotation of the wheels 3,4 on the left and right sides of the vehicle 1 may be measured independently.
- Position sensors 7. These may include, for example, a GPS system or the like to determine the vehicle's position on the surface of the Earth or with respect to fixed reference points.
- Pedal sensors 8. These sensors may detect whether the accelerator, brake and/or clutch pedals of the vehicle 1 are depressed, and may also provide information as to the amount by which the respective pedals are depressed.
- Suspension force sensors 9. These sensors detect the force applied to the suspension of the vehicle, and respective sensors 9 may be provided for the front and rear wheels 3,4, or even for each of the four wheels independently.
- A steering sensor 10. This sensor 10 determines the extent to which a steering wheel of the vehicle 1, and/or the wheels 3,4 of the vehicle 1 that are involved in steering, are turned.

The signals from the various sensors 5-10 are provided to a control unit 11 of the vehicle 1. It is to be understood that the control unit 11 may comprise one processor, but may also comprise two or more processors distributed throughout the vehicle 1. The control unit 11 is operable to analyse the signals provided from the sensors 5-10, and is also operable to provide firing signals to one or more safety systems of the vehicle 1. The safety systems may include various air-bags, such as a front air-bag 12 or a side air-bag or an inflatable curtain (IC) - type side air-bag 13. A seat belt pretensioner may also be provided. In preferred embodiments both a reversible seat belt pretensioner and an irreversible seat belt pretensioner are provided. As will be understood by those skilled in the art, a reversible pretensioner may be electrically or pneumatically powered, and can be returned to its original state after being activated, whereas an irreversible seat belt pretensioner may be powered by a pyrotechnic device and cannot simply be reset after activation without at least some components being replaced. Those skilled in the art will be aware that an irreversible pretensioner can generally apply a restraining effect more swiftly, and with greater force, than a reversible pretensioner.

Statistical studies have shown that "run-off-the-road" accidents are the main types of car accidents which result in human fatalities.

In this specification, a "run-off-the-road" event is defined as being one where the vehicle has left the surface of a road, either through being airborne above the road, or having moved off the road and entered non-road terrain.

Among run-off-the-road accidents, there are three main types. In a first type of event, the car travels along rough terrain 14, as shown schematically in figure 2. When this occurs the vehicle 1 may experience extreme roll and pitch motion, for instance as may be experienced when driving a vehicle at speed along a forest path.

A second type of event involves the vehicle 1 entering a ditch 15. This is defined as a situation in which the vehicle 1 drives down onto a banked ditch 15 from a flat road 16, as shown schematically in figure 3.

In a third type of situation, the vehicle 1 is airborne. This is defined as being the situation where at least the front wheels 3 of the vehicle 1 are raised above, and are not in contact with, the ground 17, as shown schematically in figure 4.

In each type of situation, it can be important to activate vehicle safety systems to protect the occupant(s) of the vehicle 1. However, the systems that should be activated may vary depending upon the situation, and it is usually not desirable to activate safety systems that are not needed, as this can entail and unnecessary risk of injury or discomfort to the vehicle occupant(s). It is therefore important to be able to distinguish reliably between the various types of event.

In preferred embodiments of the invention, the control unit 11 applies a three-stage process in deciding whether or not to trigger any vehicle safety systems.

A first stage of the process is a state detection step. This step may be carried out by a state detection module.

In the state detection step, signals from the various vehicle sensors 5 - 10 are analysed to determine whether any of the three situations outlined above are occurring.

For instance, to determine whether a vehicle 1 is driving over rough terrain, the signals from roll and pitch inertia sensors 5 may be analysed. As discussed above, if the vehicle 1 is driving over rough terrain 14 then the vehicle 1 is likely to experience substantial roll and pitch motion. A determination may therefore be made that the vehicle 1 is driving over rough terrain if the amplitude of the roll or pitch experienced by the vehicle 1 exceeds a predetermined threshold, or if the rate of change of roll or pitch (i.e. acceleration around the roll or pitch axis) exceeds a predetermined threshold.

Alternatively, the vertical acceleration of the vehicle 1, as determined by a vertical acceleration sensor, may be analysed - if the rate of vertical acceleration changes rapidly this may be indicative of the vehicle 1 jolting up and down, and thus indicative of the vehicle 1 driving over rough terrain 14.

As a further alternative, the force experienced by the suspension sensors 9 may be analysed. If the force experienced by the suspension sensors 9 exceeds a threshold value, or varies rapidly for a sufficiently long period, this may also be indicative that the vehicle 1 is being jolted up and down by rough terrain 14.

To determine whether the vehicle 1 has encountered a ditch 15, signals from a pitch inertia sensor 5 may be analysed. If the vehicle 1 pitches forwardly (i.e. rotates so that the nose of the vehicle 1 dips downwardly) by more than a predetermined threshold (for instance, 5° or 10°) then it may be determined that the vehicle 1 has entered a ditch 15.

Other indications that the vehicle 1 has entered a ditch 15 may include the force experienced by front suspension sensors 9 being significantly greater than the force experienced by rear suspension sensors 9, and also indications that the vehicle 1 is driving over relatively rough terrain 14 (see above), as the surface of a ditch 15 is likely to be less smooth than the surface of a paved road.

There are several ways of determining whether a vehicle 1 may be airborne. Firstly the acceleration experienced by a vertical inertia sensor 5 may drop significantly, even to around zero, as the vehicle 1 may effectively be in freefall if it is airborne.

In addition, the force experienced by suspension sensors 9 of the front wheels 3 and/or the back wheels 4 may be zero or otherwise very low, as the weight of the vehicle 1 is effectively removed from the suspension.

In addition, the rate of rotation of the front and/or rear wheels 3,4 may cease to be strongly correlated with the longitudinal acceleration of the vehicle 1. For instance, if (in a front wheel drive vehicle) the front wheels 3 of the vehicle 1 leave the road surface, and the driver presses the accelerator pedal, the front wheels 3 may begin to rotate very rapidly. This will not, however, coincide with forward longitudinal acceleration of the vehicle 1, as would be expected if the front wheels 3 were in contact with the road surface 17. Similarly, the driver may press the brake pedal, causing the front wheels 3 to stop rotating rapidly, again without this being accompanied by a negative longitudinal acceleration of the vehicle 1.

Similarly, the driver may turn the steering wheel of the vehicle 1 left or right, without this leading to a lateral acceleration of the vehicle 1.

Finally, if the vehicle 1 is airborne then the vehicle 1 may pitch and/or roll at a rate which is greater than that would be expected if the vehicle 1 was in contact with the road surface 17.

Depending upon the signals received from the vehicle sensors 5 - 10 the state detection step may indicate that one of the three situations outlined above is likely to be occurring.

A second step in the process is a state confirmation step. This step may be carried out by a state confirmation module.

In the state confirmation step of the procedure, the determination made during the state detection step is confirmed (or, alternatively, is not confirmed).

There are two principal ways in which a determination made at the state detection step may be confirmed. Firstly, it may be determined that the conditions which initially gave rise to the detection of a particular event persist for a certain length of time. The length of time may vary depending upon the nature of the event. For instance, for a determination that the vehicle 1 is travelling over rough terrain 14, the determination may be confirmed in the state confirmation step if the signals and/or processed signals relating to roll and/or pitch of the vehicle 1 rate (e.g. based on root mean square (RMS) or standard deviation and peak-to-peak analysis) remain above a threshold, or repeatedly exceed a threshold, for a duration of 300ms. This duration may be varied, and in particular may be varied in dependence upon the speed of the vehicle 1.

The second main way in which a determination may be confirmed is through analysing signals from one or more sensors 5-10 during the state detection step, and analysing signals from one or more different sensors 5 - 10 during the state confirmation step.

For instance, it may be determined that the vehicle 1 is airborne if downward acceleration experience by a vertical inertia sensor 5 of the vehicle 1 drops below a predetermined threshold. This determination may subsequently be confirmed in the state confirmation step if the force experienced by suspension of the front and/or rear wheels 3,4 drops below a second threshold.

As a further example, an initial determination may be made that the vehicle 1 is driving over rough terrain 14 if the magnitude of the roll and/or pitch experienced by the vehicle 1 is above a predetermined threshold. This determination may subsequently be confirmed if, through a position sensor 7 of the vehicle 1 (such as a GPS system), it is determined that the vehicle 1 is not driving over a road, but is in an off-road region.

In some embodiments, two or more separate analyses may be carried out at the state confirmation step. For instance, a determination that the vehicle 1 is airborne may be initially made through analysis of the signal 5 from the vertical inertia sensor 5, and confirmed by signals from the suspension sensors 9, as discussed above. In addition to this, the determination that the vehicle 1 is airborne may further be confirmed through signals from the pitch inertia sensor 5 of the vehicle 1.

Optionally, once a state has been detected and confirmed, a further state selection step is carried out. This state selection step may be carried out by a state selection module.

In the state selection step, a decision is made as to a particular type of event that is most likely to be occurring, where there is ambiguity in this regard based on the signals received from the vehicle's sensors 5-10. In a preferred embodiment, the algorithm employed during the state selection step is as follows.

If the signals received from the vehicle's sensors 5-10 indicate that the vehicle 1 is airborne, then the vehicle 1 can neither be entering a ditch nor travelling over rough terrain 14. Therefore, if the vehicle's sensors 5-10 indicate that the vehicle 1 is airborne, this is the state that is selected as being the one that is determined to be occurring.

The signals from the vehicle's sensors 5-10 may often be more ambiguous with respect to whether the vehicle 1 is entering a ditch 15 or driving over rough terrain 14, as the signals received by the vehicle's sensors 5-10 may be similar in these situations. However, the situation of the vehicle 1 entering a ditch 15 may be seen as one instance of travelling over rough terrain 14, as rough terrain 14 may include ditch-like features. Therefore, if the signals received from the vehicle's sensors 5-10 are consistent with both entering a ditch 15 and driving over rough terrain 14 (but not with the vehicle 1 being airborne), it will be determined that the vehicle 1 is driving over rough terrain 14.

Finally, only if the signals received from the vehicle's sensors 5-10 are consistent with the vehicle 1 entering a ditch 15, but are not consistent with the vehicle 1 being airborne or driving over rough terrain 14, will it be determined that the vehicle 1 is entering a ditch 15.

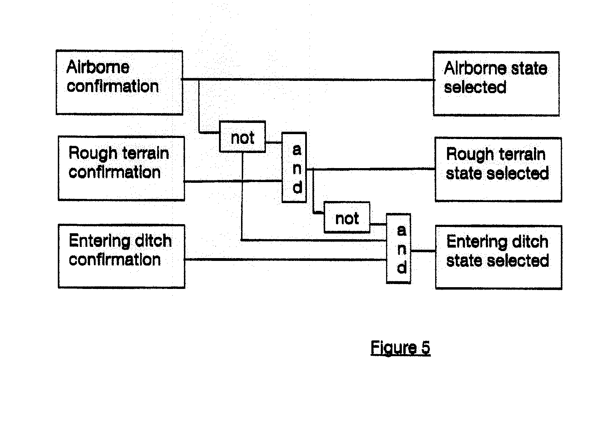

A schematic logic diagram summarising this state selection step is shown in figure 5.

In a third step, once one of the three events outlined above has been detected and subsequently confirmed, a firing decision step is carried out. This step may be carried out by a firing decision module.

In the firing decision step, a determination is made as to whether one or more vehicle safety systems are to be triggered. Where both reversible and irreversible safety systems are available, a determination may also be made as to which of these two types of system is appropriate.

In preferred embodiments of the invention, the firing decision step assesses and/or estimates the severity of the confirmed event, particularly with regard to the effects of the event upon the occupant(s) of the vehicle 1.

Where the event is confirmed as the vehicle 1 travelling along rough terrain 14, the severity may be estimated as a function of the maximum amplitude of acceleration experienced by the roll and/or pitch inertia sensors 5, of the greatest rate of change of roll and/or pitch experienced by the roll or pitch inertia sensors 5, or of the average acceleration experienced by the roll and/or pitch inertia sensors 5 over a period of time. Any of these metrics will provide an indication of the severity of the forces that will act on an occupant of the vehicle 1, tending to throw the vehicle occupant around the interior of the vehicle cabin, possibly resulting in injury.

A skilled person will appreciate that other criteria, or combinations of criteria, may be used to estimate the severity of a "rough terrain" event.

In preferred embodiments, safety systems suitable to protect the occupants of vehicle in the case of a "rough terrain" event may be activated if (for example) the maximum acceleration experienced by the roll and/or pitch sensors exceeds a predetermined threshold.

As discussed above, the vehicle 1 may include both reversible and irreversible safety arrangements, for instance a reversible seat belt pretensioner and an irreversible seat belt pretensioner. In some embodiments, a reversible safety mechanism will be activated if the maximum acceleration experienced by the roll and/or pitch inertia sensors 5 exceeds a first threshold, and an irreversible safety mechanism will be activated if a second, higher threshold is exceeded.

At the firing decision step, the safety arrangements that are to be activated may also be decided upon.

Staying with the example of a "rough terrain" event, in general the activation of a seat belt pretensioner and both front and side air-bags may be desirable to protect an occupant fully from the forces arising from the vehicle travelling at speed over rough terrain. However, depending upon the severity of the forces experienced, it may be appropriate to activate only some of these systems.

In an embodiment, for example, if the severity of the forces experienced by the roll and/or pitch inertia sensors 5 exceeds a first threshold, only the seat belt pretensioner will be activated. If the forces experienced exceed a second, higher threshold, side air-bags 13 may also be activated. Finally, if the forces experienced exceed a third, still higher threshold, a front air-bag 12 may also be activated.

In further embodiments, if an appropriate threshold is exceeded, only a front air-bag 12, and not a side air-bag 13, may be triggered if the pitch inertia sensor 5 experiences high acceleration, but the roll inertia sensor 5 experiences only low acceleration. This can indicate that the vehicle 1 is travelling at relatively high speed over sharp ridges, but is not experiencing any significant side-to-side motion, in which case the firing of side air-bags 13 may be unnecessary. Conversely, if significant roll is detected, but only low levels of pitch, it may be appropriate to activate only one or more side air-bags 13, and not a front air-bag 12.

If it is determined that the vehicle 1 is entering a ditch 15, the likely severity of the event may be estimated by considering the difference between the force experienced by the front suspension sensors 9 as compared with the force experienced by the rear suspension sensors 9. This metric may be considered in combination with the level of acceleration experienced by the roll and/or pitch inertia sensors 5. A skilled person will appreciate that there are further ways in which the severity of the situation may be reliably estimated.

If it is determined that the vehicle 1 is airborne, the primary concern is the severity of the impact when the vehicle 1 makes contact with the ground 17. One way to consider the likely severity of this event is, therefore, to consider the time over which the vehicle 1 appears to be airborne - the longer the period of time over which the vehicle 1 is airborne, the greater the severity of the ultimate impact is likely to be.

The severity of the impact can also be influenced by other factors. For instance, if only the front wheels 3, but not the rear wheels 4, of the vehicle 1 are off the road surface 17, the resulting impact is likely to be less severe than if both the front and the rear wheels 3,4 are off the road surface 17.

Another consideration is the orientation of the vehicle 1 with respect to the road surface 2 when the impact occurs. If the vehicle 1 is airborne and remains substantially horizontal, it is likely that the vehicle 1 will land on all four of its wheels 3,4. The resulting impact, while unpleasant, is relatively unlikely to cause severe injury to a vehicle occupant.

However, if the vehicle 1 pitches forwardly, or rolls to one side or the other, the resulting impact has the ability to cause more serious injury. Therefore, signals from the roll and/or pitch inertia sensors 5 may also be used to determine the orientation of the vehicle 1 once it is airborne.

As discussed above, the decision as to whether to activate certain safety systems will depend upon the estimated severity of the impact. In one example, if the length of time for which the vehicle 1 is determined to be airborne exceeds a first threshold, appropriate safety systems will be activated. Once again, if both reversible and irreversible safety systems are available, a reversible safety system (such as a seat belt pretensioner) may be activated if the likely severity is estimated to be above a first threshold, and an irreversible safety system will be activated if the likely severity is estimated to be above a second, higher threshold.

The safety systems that are activated may also depend upon the likely nature of the impact. If the vehicle 1 is determined to have pitched forwardly whilst airborne, then it is important that a seat belt pretensioner (preferably, a fast, irreversible seat belt pretensioner) is activated, and also that a front air-bag 12 is activated.

If it is determined that the vehicle 1 has not pitched significantly, but that it has rolled to one side or the other, it is important that a seat belt pretensioner and one or more side air-bags 13 are activated.

It will be understood that embodiments of the invention provide a three-stage process (which may be supplemented by a fourth, state selection step), which will assist in reliably identifying which type of "run off the road" event a vehicle is involved in, and to activate the appropriate safety systems if an appropriate event is detected.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method for activating safety systems of a motor vehicle, the method comprising the steps of:
monitoring signals from at least one vehicle sensor;
analysing the signals from the at least one sensor to determine that the vehicle appears to be involved in a particular one of a plurality of pre-defined "run off the road" events:
confirming the determination by analysing signals from at least one different vehicle sensor, performing a different analysis on the signals from the at least one sensor, or analysing signals from the at least one sensor over a predetermined period of time;
where a detection is confirmed, estimating the severity of the event;
and
based on a confirmed determination that the vehicle is involved in a particular event, and the estimated severity of the event, selecting one or more vehicle safety systems to be activated to protect an occupant of the vehicle.

2. A method according to claim 1, wherein the analysing step includes determining that the vehicle appears to be involved in a particular one of:
travelling over rough terrain; entering a ditch; and being airborne;

3. A method according to claim 1 or 2, comprising the step of comparing the signals received from the sensors with stored thresholds relating to each of the pre-defined events.

4. A method according to any preceding claim wherein the detection of an event is confirmed if signals indicating that the event is occurring persist for a predetermined length of time.

5. A method according to any preceding claim, further including a state selection step, carried out after the confirming step, wherein, when the signals received from the at least one vehicle sensor could indicate that two or more possible events are occurring, selecting one of the two or more possible events.

6. A method according to claim 5, wherein an event is selected using a hierarchy.

7. A method according to claim 5 or 6 wherein, if the signals from the at least one sensor could indicate that the vehicle is airborne, or is travelling over rough terrain or is entering a ditch, the state of the vehicle being airborne is selected.

8. A method according to any one of claims 5 to 7 wherein, if the signals from the at least one sensor could indicate that the vehicle is entering a ditch or travelling over rough terrain, the state of travelling over rough terrain is selected.

9. A method according to any one of claims 5 to 8 wherein the state of entering a ditch is selected only if the signals from the vehicle sensors are not consistent with the vehicle being airborne or the vehicle travelling over rough terrain.

10. A method according to any preceding claim, wherein the vehicle is equipped with a reversible restraint system and an irreversible restraint system, and wherein the reversible restraint system is activated if the estimated severity is above a first threshold but below a second threshold, and the irreversible restraint system is activated if the estimated severity is above the second threshold.

11. A computer program comprising computer program code adapted to perform all of the steps of any one of the preceding claims when run on a computer.

12. A computer program according to claim 11, embodied on a computer-readable medium.

13. A vehicle having at least one vehicle sensor, one or more vehicle safety system and a processor, wherein the processor is operable to carry out all of the steps of any one of claims 1 to 10.
